# EUROPEAN PATENT SPECIFICATION

(11) **EP 4 651 723 B1**
(45) Date of publication and mention of the grant of the patent: **25.11.2026**
(21) Application number: 24701301.4
(22) Date of filing: 18.01.2024
(51) Int. Cl.: A22C 21/00

(54) **SYSTEM AND METHOD FOR REMOVING A WING OR WING PART FROM A POULTRY CARCASS**
SYSTEM UND VERFAHREN ZUM ENTFERNEN EINES FLÜGELS ODER FLÜGELTEILS VON EINEM GEFLÜGELSCHLACHTKÖRPER
SYSTÈME ET PROCÉDÉ POUR RETIRER UNE AILE OU PARTIE D'AILE D'UNE CARCASSE DE VOLAILLE

(30) Priority: 19.01.2023 NL 2033992
(43) Date of publication of application: 26.11.2025
(73) Proprietor: Foodmate B.V., 3281 NJ Numansdorp (NL)
(72) Inventor: DE KONING, Adriaan Hendrik, 3281 NJ Numansdorp (NL); BUCKO, Tadeusz Marian, 3281 NJ Numansdorp (NL); VAN EENDENBURG, Dolf Joris, 3281 NJ Numansdorp (NL); DE KORT, Jelle, 3281 NJ Numansdorp (NL)
(74) Representative: V.O.
(86) International application number: PCT/NL2024/050021
(87) International publication number: WO 2024/155186

(56) References cited:
- EP-A2- 0 813 814
- WO-A1-97/21352
- US-B1- 11 191 281

## Description

### FIELD

The invention generally relates to poultry processing systems, particularly for removing a wing, or parts thereof, from a poultry carcass.

### BACKGROUND

Processing of poultry carcasses main involve the removal of the wings. The removal of the wings from a remainder of the poultry carcass typically involves the conveyance of the poultry carcass along a stationary knife, which stationary knife cuts between a wing and a chest of the carcass to separate the wing from the chest. There is a demand for methods and systems for automatically removing the wings from poultry carcasses.

EP0813814 A2 discloses a method and apparatus for separating bone and meat of an upper half of a poultry carcass wherein tissues such as a tendon, ligament, muscle, envelope and the like around a shoulder joint are cut and breast meat is separated from a bone together with wings in a stable manner. 1

### SUMMARY

It is an object to propose a method and system of automatically removing a wing from a poultry carcass, particularly in a inline poultry processing system and method. In a more general sense, it is an object to overcome or ameliorate at least one of the disadvantages of the prior art. It is also an object of the present invention to at least provide alternative processes and structures that are more effective than the prior art and which can be provided and used relatively inexpensively. At any rate the present invention is at the very least aimed at offering a useful choice and contribution to the existing art.

According to an aspect in accordance with claim 1, a method is provided for, e.g. inline, removing a wing or wing part from a poultry carcass, the wing or wing part comprising multiple wing sections articulated by one or more joints. The method comprises, by an automatic processing system conveying the poultry carcass on a mandrel; contactlessly determining a joint position of the one or more joints of the wing; adjusting a knife position of one or more knifes relative to the poultry carcass based on the determined position; and separating the wing or wing part from a remainder of the carcass by cutting, particularly while conveying the poultry carcass, the wing with the one or more knifes through the one or more joints at the determined position.

The wing is cut through one or more of the joints, i.e. in between the joint knuckles, to a prevent the formation of bone fragments and also to minimize wear on the knife. The cutting through the one or more joints hence causes the separation of the wing or wing part from the poultry carcass, i.e. the complete disconnection of the wing or wing part from the carcass. Hence, no additional separation means are required. Such cut may hence be referred to herein as a separation cut. By determining the position of the one or more joints in the wing, e.g. the carpal joint, the elbow joint and/or the shoulder joint, the knife can be appropriately positioned such that it cuts clean through any of those joints. The method provides flexibility to process variously sized poultry carcasses, and to obtain various different wing cuts. For example, the method allows for separating a tip-wing section from a remainder of the wing by cutting through the carpal joint; or for separating a mid-wing section, e.g. joined with the tip-wing section, from a remainder of the wing by cutting through the elbow joint; or for separating the upper-wing section, e.g. joined with the mid-wing section and tip-wing section, from the carcass by cutting through the shoulder joint. The mid-wing section is sometimes referred to as the mini wing or wingette. The upper-wing section is sometimes referred to as the mini-drum or drumette.

Optionally, the wing comprises a tip-wing section, a mid-wing section and an upper-wing section, the tip-wing section and the mid-wing section being articulated by a carpal joint, the upper-wing section and the mid-wing section being articulated by an elbow joint, and the upper-wing section and the carcass being articulated by a shoulder joint.

Optionally, the determining of the joint position comprises determining a carpal joint position of a carpal joint relative to the carcass, and/or determining an elbow joint position of an elbow joint relative to the carcass, and/or determining a shoulder joint position of a shoulder joint relative to the carcass.

Optionally, the determining of the one or more joint positions comprises obtaining an image from an image sensor, in particular an X-ray image sensor, and analyzing the obtained image to determine the one or more joint positions. The image may for example be acquired when the wing is held in an extended position.

In accordance with the invention, the method comprises, by the automatic processing system, adjusting a position of a knife of the automatic processing system relative to the poultry carcass, in a direction transverse to a direction of the conveying, depending on the determining of the one or more joint positions, so as to align the knifes with any of the determined joint positions .

Optionally, during the conveying, determining and/or cutting, the mandrel is oriented to direct a craniocaudal axis of the carcass substantially parallel to a direction of the conveying.

In accordance with the invention, the wing is cut with the one or more knifes through the one or more joints by having the one or more joints collide with the one or more knifes while conveying the poultry carcass. Hence, the one or more knifes are laterally adjusted relative to the conveyor for having the one or more knifes align with the one or more joints of the wing, wherein the conveying of the poultry carcass moves the wing along the one or more knifes for allowing the knifes to cut through the joints.

Hence, the method comprises, by a conveyor, conveying the poultry carcass on a mandrel along a conveyance path; while conveying the poultry carcass, contactlessly determining a joint position of the one or more joints of the wing relative to the conveyor; based on the determined joint position, adjusting a knife position of one or more knifes relative to the conveyor so as to align the one or more knifes with the one or more joints along the conveyance path; and separating the wing or wing part from a remainder of the carcass by, while conveying the poultry carcass along the conveyance path, colliding the one or more joints with the one or more knifes for cutting the wing with the one or more knifes through the one or more joints.

Optionally, the one or more knifes are adjustable in a direction transverse to the conveyance direction of the conveyor and nonadjustable in a direction parallel to the conveyance direction.

Optionally, the method comprises engaging the wing with a lateral guide rail so as to extend the wing outward from the poultry carcass. Wing may hence be extended outward from the poultry carcass to facilitate access for the one or more knifes to the one or more joints of the wing, particularly to the shoulder joint. The lateral guide rail may engage the wing at the upper-wing section and/or the mid-wing section such that at least the upper-arm section extends from the poultry carcass in lateral outward direction.

Optionally, the method comprises adjusting a knife position of the one or more knifes, particularly of a first knife, based on the determined shoulder joint position, and making a preparatory incision with said knife along the shoulder joint in a first cutting plane that extends parallel to a direction of conveying. It will be appreciated that the preparatory incision may detach the wing or wing part only partly from the carcass, and does not cause a separation of the wing or wing part from the carcass. The preparatory incision may for instance severe one or more tendons or other connective tissues that connect the wing or wing part to the carcass.

Optionally, the method comprises adjusting a knife position of the one or more knifes, particularly of a second knife, based on the determined shoulder joint position, and making a separation cut at least partly through the shoulder joint in a second cutting plane that extends parallel to the direction of conveying, different from the first plane. It will be appreciated that the separation cut causes the separation of the wing or wing part from the carcass.

Optionally, the preparatory incision and the separation cut are made at opposite sides of the shoulder joint.

Optionally, the first cutting plane and the second cutting plane are substantially perpendicular to each other.

Optionally the method comprises, while making the separation cut with the knife in the second cutting plane, moving the knife away from the carcass in a direction transverse to the second cutting plane. By moving the knife, e.g. the second knife, away from the poultry carcass, the knife may pull the upper-wing section away from the carcass, thereby facilitating the separation of the upper-wing section from the carcass.

Optionally, each of the preparatory incision and the separating cut is of a predefined length and/or depth.

Optionally, the knife position of the one or more knifes that make the preparatory incision and/or the separating cut, e.g. the first knife and the second knife respectively, is adjusted relative to the shoulder joint based on the determined shoulder joint position for obtaining the predefined length and/or and depth.

Optionally, the method comprises extending the wing, preferably such that the upper-wing section, the mid-wing section and the tip-wing section are substantially aligned with each other. Optionally, an image of the wing, e.g. an X-ray image, is acquired while the wing is extended.

Optionally, the method comprises conveying the poultry carcass with the wing in extended position by having a tip-wing section of the wing grasped by a tip-wing grasper and/or a mid-wing section of the wing grasped by a mid-wing grasper. For example, the method may involve extending the wing by, with the tip-wing grasper, grasping the tip-wing section of the wing and moving the wing tip way from the poultry carcass so as to extend the wing outward from the poultry carcass, preferably with the tip-wing section substantially aligned with a mid-wing section and an upper-wing section of the wing. For example, the method may involve, grasping, by the mid-wing grasper of the automatic processing system, the mid-wing section of the wing between a carpal joint and an elbow joint. Prior to grasping the mid-wing section with the mid-wing grasper and/or the tip-wing section with the tip-wing grasper, a position of the respective grasper may be adjusted based on the determined joint positions of the wing.

Optionally, the method comprises adjusting a knife position of the one or more knifes, particularly of a third knife, based on a determined carpal joint position such that said knife aligns with a carpal joint, and separating the tip-wing section from a remainder of the wing by cutting with the said knife through the carpal joint.

Optionally, the method comprises adjusting a knife position of the one or more knifes, particularly of a fourth knife, based on a determined elbow joint position such that said knife aligns with the elbow joint, and separating the mid-wing section, optionally joint with the tip-wing section, from a remainder of the wing by cutting with said knife through the elbow joint.

Optionally, the method comprises adjusting a knife position of the one or more knifes, particularly of a fifth knife, based on a determined shoulder joint position such that said knife aligns with the shoulder joint, and separating the upper-wing section, optionally joint with the mid-wing section, from the carcass by cutting with said knife through the shoulder joint.

Optionally, the method is performed for at least two wings of the same carcass, for example sequentially and/or simultaneously.

According to another aspect in accordance with the invention, an automatic processing system is provided, configured for executing a method as described herein of removing a wing or wing part from a poultry carcass. The system comprises a conveyor having a mandrel for conveying the carcass on the mandrel in a conveyance direction; a sensor configured for contactlessly determining one or more joint positions in the wing; and one or more knifes having an adjustable position relative to the conveyor, wherein the system is arranged for adjusting, dependent on the determined joint position, a knife position of the one or more knifes relative to the conveyor in a direction transverse to the conveyance direction for aligning the one or more knifes with the one or more joints so as to separate the wing or wing part from a remainder of the carcass by cutting the wing with the one or more knifes through the one or more joints at the determined joint positions by having the one or more joints collide with the one or more knifes while conveying the poultry carcass.

Optionally, the sensor includes an image sensor, in particular an X-ray image sensor, configured for capturing an image of the carcass, and wherein the system includes a processing unit configured for determining the one or more joint positions based on the captured image.

Optionally, the conveyor is configured for conveying the carcass in an orientation in which a craniocaudal axis of the carcass is directed substantially parallel to the conveyance direction of the conveyor. The conveyor may for example be an overhead conveyor.

Optionally, the system comprises a lateral guide rail extending laterally of the conveyor generally parallel to the conveyance direction of the conveyor, the lateral guide rail being configured for, while conveying carcass with the conveyor, engaging the wing and guiding the wing to an extended position in which at least an upper-wing section of the wing extends outward from the carcass.

Optionally, the system comprises a first knife having an adjustable first knife position arranged for making a preparatory incision with said knife along the shoulder joint in a first cutting plane that extends parallel to a direction of conveying.

Optionally, the system is arranged for adjusting the first knife position based on a determined shoulder joint position of a shoulder joint of the wing.

Optionally, the system comprises a second knife having an adjustable second knife position arranged for making a separation cut at least partly through the shoulder joint in a second cutting plane that extends parallel to the direction of conveying, different from the first plane.

Optionally, the system is arranged for adjusting the second knife position based on the determined shoulder joint position of a shoulder joint of the wing.

Optionally, the preparatory incision and the separation cut are at opposite sides of the shoulder joint.

Optionally, the first cutting plane and the second cutting plane are substantially perpendicular to each other.

Optionally, the system is arranged for, while making the separation cut with the second knife in the second cutting plane, moving the second knife away from the carcass in a direction transverse to the second cutting plane.

Optionally, each of the preparatory incision and the separating cut is of a predefined length and/or depth.

Optionally, the first knife position and/or the second knife position is adjusted relative to the shoulder joint based on the determined shoulder joint position so as to obtain the predefined length and/or and depth.

Optionally, the system comprises a tip-wing grasper arranged for grasping a tip-wing section of the wing during conveyance of the poultry carcass. For example, the tip-wing grasper may be arranged for being movably driven laterally away from the poultry carcass while grasping the tip-wing section so as to extend the wing outward from the poultry carcass with the tip-wing section substantially aligned with a mid-wing section and an upper-wing section of the wing.

Optionally, the system comprises a mid-wing grasper arranged for grasping a mid-wing section of the wing during conveyance of the poultry carcass. Hence, the mid-wing grasper may be arranged for grasping the mid-wing section of the wing between a carpal joint and an elbow joint. The system may for example be arranged for adjusting a position of the mid-wing grasper relative to the conveyor based on the determined one or more joint position of the wing.

Optionally, the system comprises a third knife arranged for cutting through a carpal joint of the wing, wherein the system is arranged for adjusting a position of the third knife based on the determined joint position such that the third knife aligns with the carpal joint between the tip-wing section and the mid-wing section of the wing, and separating the tip-wing section from a remainder of the wing by cutting with the third knife through the carpal joint.

Optionally, the system comprises a fourth knife arranged for cutting through an elbow joint of the wing, wherein the system is arranged for adjusting a position of the fourth knife based on the determined joint position such that the fourth knife aligns with the elbow joint between the mid-wing section and an upper-wing section, and separating the mid-wing section from a remainder of the wing by cutting with the fourth knife through the elbow joint.

Optionally, the system is configured to separate at least two wings of the same carcass sequentially and/or simultaneously.

It will be appreciated that any of the aspects, features and options described herein can be combined. It will particularly be appreciated that any of the aspects, features and options described in view of the method apply equally to the automatic processing system, and vice versa.

### BRIEF DESCRIPTION OF THE DRAWINGS

Embodiments of the present invention will now be described in detail with reference to the accompanying drawings in which:
Figure 1 shows an example of an automatic processing system for processing a poultry carcass;
Figures 2A-2D show an example of a wing cutter station of the automatic processing system;
Figures 3A-3D show an example of a wing cutter station of the automatic processing system.

### DETAILED DESCRIPTION

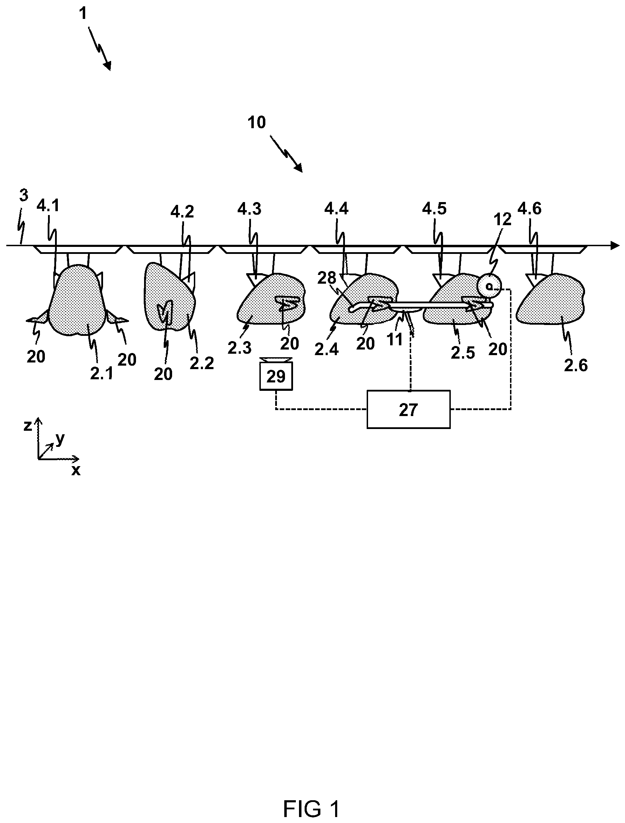

Figure 1 shows an example of an automatic processing system 1 for inline processing poultry carcasses 2.i, particularly a poultry carcass front half including a chest and a wing, while the poultry carcasses 2.i are conveyed in succession long a conveyance path. The system 1 comprises a conveyor 3 for conveying multiple poultry carcasses 2.i in a conveyance direction, in succession. Here, the conveyor 3 is an overhead conveyor for conveying the poultry carcasses in a horizontal plane. The conveyance direction of the conveyor 3 is indicated in figure 1 by the arrow, here corresponding to the x-direction. In this example, the conveyor is shown to convey six poultry carcasses 2.1-2.6, but it will be appreciated that the conveyor may convey more or less than five poultry carcasses. The poultry carcasses 2.i are conveyed on respective mandrels 4.i of the conveyor 3. Each mandrel 4.i is associated with a conveyance site of the conveyor.

Each mandrel 4 is inserted into a breast cavity of the poultry carcass 2, and supports the poultry carcass 4 during conveyance. The mandrel 4 mounts to the conveyor 3 at a proximal end 5 thereof and extends in longitudinal direction to a free distal end. The mandrel 4 is configured for supporting the poultry carcass 2 with a craniocaudal axis of the poultry carcass 2 aligned with the longitudinal direction of the mandrel 4. It will be appreciated that the craniocaudal axis extends through the head end and the tail end of the carcass 2. The mandrel 4 includes in this example a plane of symmetry, wherein the poultry carcass 2 is supported on the mandrel 4, with a keel bone of the poultry carcass 2 aligned with the plane of symmetry.

Here, an orientation of the mandrel 4 relative to the conveyor 3 is adjustable. The mandrel orientation is adjusted while the mandrel 4 is being conveyed by the conveyor 3. The first and the second mandrel 4.1, 4.2 are shown to be oriented such that the mandrel's longitudinal direction, and hence, also the craniocaudal axis of their respectively associated poultry carcasses 2.1, 2.2, are transverse to the conveyance direction. Here, for the first and second mandrel 4.1, 4.2, the craniocaudal axis extends in the z-direction. From the first mandrel 4.1 to the second mandrel 4.2, the mandrel 4 is rotated about the longitudinal axis, accordingly moving the plane of symmetry of the mandrel from the y-z plane to the x-z plane. From the second mandrel 4.2 to the third mandrel 4.3, the mandrel 4 is rotated about a rotation axis that is transverse to the longitudinal direction of the mandrel, such that the longitudinal axis of the mandrel, and hence the craniocaudal axis of its associated poultry carcass, becomes aligned with the conveyance direction of the conveyor 3. The orientation of the mandrel 4 is, here, accordingly adjusted to orient the poultry carcass 2 such that its craniocaudal axis aligns with the conveyance direction, particularly with the cranial end of the carcass 2 leading and the caudal end of the carcass trailing, more particularly with a breast of the poultry carcass 2 oriented downward. For the third to the sixth mandrel 4.2-4.6, the plane of symmetry of the mandrel 4 extends in the x-z plane.

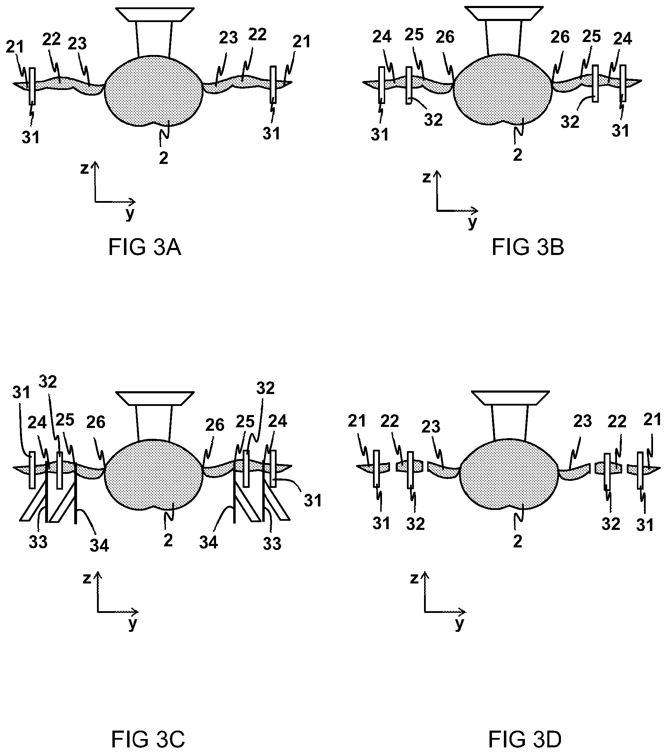

The system 1 comprises a wing cutter station 10. The wing cutter station 10 is arranged along the conveyance path of the conveyor. The wing cutter station 10 shown in figure 1 is particularly configured for removing a wing 20, or a part thereof, from the carcass 2, while the carcass 2 is conveyed along the conveyance path past the wing cutter station 10. The wing cutter station 10 is particularly arranged for removing an upper-wing section 23 of the wing, which upper-wing section is defined between a shoulder joint 26 and an elbow joint 25 of the wing. The upper-wing section 23 may be joined with a mid-wing section 22 of the wing 20, via the elbow joint 25. The mid-wing section 22 may in turn be joined with a tip-wing section 21 of the wing 20, via a carpal joint 24. In this example, the wing cutting station 10 is shown to remove a whole wing 20 from the poultry carcass 2, by cutting the wing 20 at the shoulder joint 26. It will however be appreciated that the tip-wing section 21 and the mid-wing section 22 need not necessarily be joined to the upper-wing section 23, and may have been removed at an earlier stage as for example shown in figures 3A-3D.

For removing at least the upper-wing section 23 of the wing, the wing cutter station 10 includes a first knife 11 and a second knife 12. The first knife 11 is in this example arranged upstream of the second knife 12, with respect to the conveyance direction of the conveyor 3. The first knife 11 and the second knife 12 cooperatively remove the whole wing 20 from the carcass 2. The first knife 11 and the second knife 12 cut in this example on opposite sides of the shoulder joint 26. The first knife 11 and the second knife 12 cut in mutually substantially perpendicular cutting planes. Here, the first knife 11 cutting plane is a substantially horizontal plane, here the x-y plane. The second knife 12 cutting plane is, here, a substantially vertical plane, here the x-z plane. Hence, here, the first knife 11 does not cut through the shoulder joint 26, but instead provides a preparatory incision alongside the shoulder joint 26. The second knife 12 cuts, in this example, through the shoulder joint, i.e. between the humerus bone of the upper-wing section 23 of the wing and the chest of the carcass 2, hence separating the upper-wing section from the carcass.

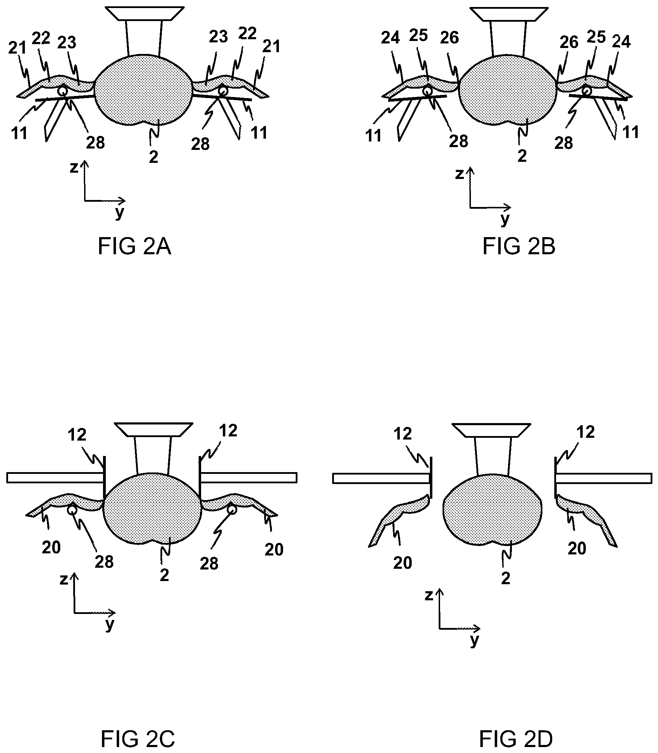

The first knife 11 and/or the second knife 12 are movable relative to the conveyor 3. Figures 2A and 2B schematically show different positions of the first knife 11 relative to the carcass 2, and figures 2C and 2D show different positions of the second knife 12 relative to the carcass 2, as frontal views. The first knife 11 and the second knife 12 are in this example stationary in the conveyance direction, here the x-direction. Hence, a cut is made with the first knife 11 and the second knife 12 by moving the poultry carcass 2 in the conveyance direction, here the x-direction, along the first and second knife 11, 12. While conveying the poultry carcass 2 in the conveyance direction, the shoulder joint 26 collides with the second knife 12, with is adjusted appropriately, thereby enabling the second knife 12 to cut through the shoulder joint 26 and separate the wing clean from the carcass 2. It will be appreciated that for a next carcass 2, the first and/or second knife 11, 12 can be readjusted accordingly, depending on the determined joint position of the next carcass 2.

The first knife 11 is in this example movable in a plane perpendicular to the conveyance direction, here the vertical y-z plane. The first knife 11 is particularly movable in the vertical z-direction for positioning the knife appropriately relative to the shoulder joint 26. The first knife 11 is also movable in the y-direction, for approaching the shoulder joint 26 and retracting the first knife 11 after an appropriate cut length has been provided. Figure 2A shows the first knife 11 in an approached position, proximate the carcass 2 for making a cut along the shoulder joint 26. The system 1 is so arranged to minimize a cut length of the cut provided with the first knife 11. The system 1 is therefore, in this example, arranged to approach the carcass with the first knife 11 and withdraw the first knife 11 from the carcass 2 in the vertical y-z plane, only to cut alongside the shoulder joint 26, and to prevent the first knife 11 from cutting the carcass elsewhere. Figure 2B shows the first knife 11 withdrawn from the carcass 2 after having made the cut alongside the shoulder joint 26.

The second knife 12 is here also movable in a plane perpendicular to the conveyance direction, here the vertical y-z plane. The second knife 12 is particularly movable in the horizontal y-direction and the vertical z-direction for positioning the knife appropriately relative to the shoulder joint 26. The second knife 12 is also movable in a direction transverse to is associated cutting plane, here corresponding to the vertical horizontal y-direction, for pulling the wing 20 away from the chest of the carcass 2 while cutting through the shoulder joint 26. The system 1 is in this example so arranged to pull the second knife 12 away from the carcass 2, here in the y-direction, while making the cut through the shoulder joint 26. Hence, the pulling away of the second knife 12 is here initiated prior to completion of the cut entirely through the shoulder joint 26. Figure 2C shows the second knife 12 in the cutting position proximate the carcass 2 for cutting through the shoulder joint 26. Figure 2D shows the second knife 12 pulled away from the carcass 2 while making the cut through the poultry carcass 26, thereby pulling away the wing 20 from the chest of the carcass.

The wing cutter station 10 also comprises a lateral guide rail 28, in this example two lateral guide rails, arranged on either side of the conveyor, laterally with respect to the conveyance direction of the conveyor 3. The guide rail 28 generally extends in the conveyance direction, here the x-direction. The guide rail 28 is arranged to engage the wing 20 of the carcass 2, while the carcass 2 is conveyed, and lift the wing 20 to an orientation in which the wing 20 extends outward of a chest portion of the carcass 2. The wing 20 is particularly lifted by the guide rail 28 for allowing the first knife 11 to approach the carcass 2 to provide a preparatory cut along the shoulder joint 26. The first knife 11 is here arranged beneath the guide rail 28, whereas the second knife 12 is arranged above the guide rail. It will be appreciated that the wing 20 need not be fully stretched, for it to be separated from the carcass 2 by the first and second knifes 11, 12.

The automatic processing system 1 comprises a sensor 29, particularly an image sensor, more particularly an X-ray image sensor. The sensor 29 is here arranged along the conveyance path of the conveyor and configured for acquiring an image of the poultry carcass 2, and transmit the image to a controller 27. The controller 27 is configured for determining, based on the image, a joint position of the wing 20, particularly a shoulder joint 26 position of the wing 20 and/or an elbow joint 25 position of the wing 20 and/or a carpal joint 24 position of the wing 20. The positioning of the first knife 11 and/or the second knife 12 relative to the conveyor 3 is controlled by the controller 27 based on the determined joint position(s), particularly based on the determined shoulder joint 26 position of the wing 20. Here, the sensor 29 is arranged upstream of the lateral guide rail 28, but it will be appreciated that the sensor 29 may arranged substantially level with the lateral guide rail 28, and acquire an image while the wing 20 is engaged by the lateral guide rail 28.

Figures 3A-3D schematically show the automatic processing system 1, arranged for, additionally, e.g. prior to, or alternatively to the cutting of the wing 20 at the shoulder joint 26, cutting the wing 20 at the carpal joint 24 and/or at the elbow joint 25, so as to remove the tip-wing section 21 of the wing, and/or the mid-wing section 22 of the wing 20. Hereto, the wing cutter station 10 comprises, here, a tip-wing grasper 31 arranged for grasping the wing 20 at the tip-wing section 21. The tip-wing grasper 31 is arranged for extending the wing 20, particularly to a stretched position in which the tip-wing section 21, the mid-wing section 22 and the upper-wing section 23 are substantially aligned with each other and extend outward from the carcass 2, particularly transverse to the conveyance direction. Here, the wing 20 extends in the horizontal y-direction. The tip-wing grasper 31 is moved in synchrony with the mandrel along the conveyance path of the conveyor, for grasping the wing tip during conveyance of the poultry carcass 2. Each mandrel may hence have an associated tip-wing grasper 31. A schematic example of the wing 20 in the stretched position is shown in figures 3A-3D.

The wing cutter station 10 also comprises, here, a mid-wing grasper 32 arranged for grasping the wing 20 at the mid-wing section 22. In this example, the wing cutter station 10 includes both a tip-wing grasper 31 or a mid-wing grasper 32, but it will be appreciated that the wing cutter station 10 may include only one, any one, of the tip-wing grasper 31 and the mid-wing grasper 32. If the wing cutter station 10 comprises only the mid-wing grasper 32, not the tip-wing grasper 31, the mid-wing grasper 32 can be used to extend the wing 20, particularly the elbow joint 24, to align the mid-wing section 22 and the upper-wing section 23 with each other. The wing cutter station 10 may also comprise an upper-wing grasper, which is omitted in this example. The tip-wing grasper 31 and the mid-wing grasper 32 are movable in synchrony with the conveyor 3, at least for a section of the conveyance path.

The wing cutter station 10 also comprises a third knife 33 and a fourth knife 34 in this example. The third knife 33 is configured to cut through the carpal joint 24 of the wing, to separate the tip-wing section 21 from the mid-wing section 22. The fourth knife 34 is configured to cut through the elbow joint 25, to separate the mid-wing section 22 from the upper-wing section 23. It will be appreciated that the cutter station 10 may include only one, any one, of the third knife 33 and a fourth knife 34. The cutter station 10 may also include a fifth knife (not shown), arranged for cutting through the shoulder joint 26. The third knife 33, the fourth knife 34 and the fifth knife are arranged to cut in a vertical plane, here the x-z plane.

Similar to the first knife 11 and the second knife 12, the third knife 33 and the fourth knife 34 are movable relative to the conveyor 3 in a plane transverse to the conveyance direction 3, here in the y-z plane, to align the third knife 33 with the carpal joint 24 and the fourth knife 34 with the elbow joint 25. The third knife 33 and the fourth knife 34 are in this example stationary in the conveyance direction, here the x-direction. The positioning of the third knife 33 and the fourth knife 34 in the y-z plane relative to the conveyor 3, is controlled by the controller 27, based on the determined joint positions from the sensor 29. The sensor 29 may for example acquire an image of the poultry carcass 2 when the wing 20 is spread, e.g. as shown in figures 3A-3D. Furthermore, the positioning of the tip-wing grasper 31 and the mid-wing grasper 32 is also controlled by the controller 27, based on the determined joint positions. The tip-wing grasper 31 may be positioned, such that it grasps the wing 20 between the wing end, and the carpal joint 24. The mid-wing grasper 32 may be positioned, such that it grasps the wing 20 between the carpal joint 24 and the shoulder joint 25. The tip-wing section 21 and the mid-wing section may be held by the tip-wing grasper 31 and the mid-wing grasper 32 respectively after completion of the cuts through the carpal joint 24 and elbow joint 25, and may release the separated wing portions 21, 22 at an appropriate location and instant.

Herein, the invention is described with reference to specific examples of embodiments of the invention. It will, however, be evident that various modifications and changes may be made therein, without departing from the scope of the invention which is defined in the appended claims. For the purpose of clarity and a concise description features are described herein as part of the same or separate embodiments, however, alternative embodiments having combinations of all or some of the features described in these separate embodiments are also envisaged.

However, other modifications, variations, and alternatives are also possible. The specifications, drawings and examples are, accordingly, to be regarded in an illustrative sense rather than in a restrictive sense.

For the purpose of clarity and a concise description features are described herein as part of the same or separate embodiments, however, it will be appreciated that the scope of the invention may include embodiments having combinations of all or some of the features described.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to an advantage.

## Claims

1. A method of removing a wing or wing part from a poultry carcass, the wing or wing part comprising multiple wing sections articulated by one or more joints, comprising, by an automatic processing system (1):
conveying the poultry carcass (2) on a mandrel;
the method being **characterised by**:
contactlessly determining a joint position of the one or more joints (24-26) of the wing (20);
adjusting a knife position of one or more knifes (11, 12, 33, 34) relative to the poultry carcass (2) based on the determined position by moving the one or more knifes, dependent on the determined joint position, in a direction transverse to a direction of the conveying so as to align the one or more knifes with the one or more joints; and
separating the wing or wing part from a remainder of the carcass by cutting the wing with the one or more knifes through the one or more joints at the determined position, wherein the wing is cut with the one or more knifes through the one or more joints by having the one or more joints collide with the one or more knifes while conveying the poultry carcass.

2. The method of claim 1, wherein the determining of the joint position comprises obtaining an image from an image sensor, in particular an X-ray image sensor, and analyzing the obtained image to determine the joint position.

3. The method of claim 1 or claim 2, wherein during the conveying, the determining and/or the cutting, the mandrel is oriented to direct a craniocaudal axis of the carcass substantially parallel to a direction of the conveying.

4. The method of any preceding claim, comprising engaging the wing with a lateral guide rail so as to extend the wing outward from the poultry carcass.

5. An automatic processing system (1) configured for removing a wing or wing part from a poultry carcass, the wing or wing part comprising multiple wing sections articulated by one or more joints, the system comprising
a conveyor (3) having a mandrel (4) for conveying the carcass (2) on the mandrel in a conveyance direction;
one or more knifes (11, 12, 33, 34) having an adjustable position relative to the conveyor;
the system being **characterised by** further comprising:
a sensor (29) configured for contactlessly determining one or more joint positions in the wing (20) ;
wherein the system is arranged for adjusting, dependent on the determined joint position, a knife position of the one or more knifes relative to the conveyor by moving the one or more knifes in a direction transverse to the conveyance direction for aligning the one or more knifes with the one or more joints (24-26) so as to separate the wing or wing part from a remainder of the carcass by cutting the wing with the one or more knifes through the one or more joints at the determined joint positions by having the one or more joints collide with the one or more knifes while conveying the poultry carcass.

6. The system of claim 5, wherein the sensor includes an image sensor, in particular an X-ray image sensor, configured for capturing an image of the carcass, and wherein the system includes a processing unit configured for determining the one or more joint positions based on the captured image.

7. The system of claim 5 or 6, wherein the conveyor is configured for conveying the carcass in an orientation in which a craniocaudal axis of the carcass is directed substantially parallel to the conveyance direction of the conveyor.

8. The system of any of claims 5-7, comprising a lateral guide rail extending laterally of the conveyor generally parallel to the conveyance direction of the conveyor, the lateral guide rail being configured for, while conveying carcass with the conveyor, engaging the wing and guiding the wing to an extended position in which at least an upper-wing section of the wing extends outward from the carcass.

9. The system of any of claims 5-8, comprising a first knife having an adjustable first knife position arranged for making a preparatory incision with said knife along the shoulder joint in a first cutting plane that extends parallel to a direction of conveying.

10. The system of claim 9, arranged for adjusting the first knife position based on a determined shoulder joint position of a shoulder joint of the wing.

11. The system of claim 9 or 10, comprising a second knife having an adjustable second knife position arranged for making a separation cut at least partly through the shoulder joint in a second cutting plane that extends parallel to the direction of conveying, different from the first plane.

12. The system of claim 11, arranged for adjusting the second knife position based on the determined shoulder joint position of a shoulder joint of the wing.

13. The system of claim 11 or 12, wherein the preparatory incision and the separation cut are at opposite sides of the shoulder joint.

14. The system of any of claims 11-13, wherein the first cutting plane and the second cutting plane are substantially perpendicular to each other.

15. The system of any of claims 11-14, arranged for, while making the separation cut with the second knife in the second cutting plane, moving the second knife away from the carcass in a direction transverse to the second cutting plane.

## Patentansprüche

1. Verfahren zum Entfernen eines Flügels oder Flügelteils von einem Geflügelschlachtkörper, wobei der Flügel oder Flügelteil mehrere Flügelabschnitte umfasst, die durch ein oder mehrere Gelenke gelenkig verbunden sind, umfassend, durch ein automatisches Verarbeitungssystem (1):
Fördern des Geflügelschlachtkörpers (2) auf einem Dorn;
wobei das Verfahren **gekennzeichnet ist durch**:
berührungsloses Bestimmen einer Gelenkposition des einen oder der mehreren Gelenke (24-26) des Flügels (20);
Anpassen einer Messerposition eines oder mehrerer Messer (11, 12, 33, 34) relativ zu dem Geflügelschlachtkörper (2) auf der Grundlage der bestimmten Position **durch** Bewegen des einen oder der mehreren Messer, in Abhängigkeit von der bestimmten Gelenkposition, in einer Richtung quer zu einer Richtung des Förderns, um das eine oder die mehreren Messer mit dem einen oder den mehreren Gelenken auszurichten; und
Trennen des Flügels oder Flügelteils von einem Rest des Schlachtkörpers **durch** Schneiden des Flügels mit dem einen oder den mehreren Messern **durch** das eine oder die mehreren Gelenke an der bestimmten Position, wobei der Flügel mit dem einen oder den mehreren Messern **durch** das eine oder die mehreren Gelenke geschnitten wird, indem das eine oder die mehreren Gelenke mit dem einen oder den mehreren Messern kollidieren, während der Geflügelschlachtkörper gefördert wird.

2. Verfahren nach Anspruch 1, wobei das Bestimmen der Gelenkposition das Erhalten eines Bildes von einem Bildsensor, insbesondere einem Röntgenbildsensor, und das Analysieren des erhaltenen Bildes umfasst, um die Gelenkposition zu bestimmen.

3. Verfahren nach Anspruch 1 oder Anspruch 2, wobei während des Förderns, des Bestimmens und/oder des Schneidens der Dorn so ausgerichtet ist, dass eine kraniokaudale Achse des Schlachtkörpers im Wesentlichen parallel zu einer Richtung des Förderns gerichtet ist.

4. Verfahren nach einem der vorstehenden Ansprüche, umfassend In-Eingriff-Bringen des Flügels mit einer seitlichen Führungsschiene, um den Flügel nach außen von dem Geflügelschlachtkörper auszustrecken.

5. Automatisches Verarbeitungssystem (1), konfiguriert zum Entfernen eines Flügels oder Flügelteils von einem Geflügelschlachtkörper, wobei der Flügel oder Flügelteil mehrere Flügelabschnitte umfasst, die durch ein oder mehrere Gelenke gelenkig verbunden sind, wobei das System umfasst
einen Förderer (3) mit einem Dorn (4) zum Fördern des Schlachtkörpers (2) auf dem Dorn in einer Förderrichtung;
ein oder mehrere Messer (11, 12, 33, 34) mit einer relativ zu dem Förderer einstellbaren Position;
wobei das System **dadurch gekennzeichnet ist, dass** es ferner umfasst:
einen Sensor (29), der zum berührungslosen Bestimmen einer oder mehrerer Gelenkpositionen in dem Flügel (20) konfiguriert ist;
wobei das System dazu eingerichtet ist, in Abhängigkeit von der bestimmten Gelenkposition eine Messerposition des einen oder der mehreren Messer relativ zu dem Förderer anzupassen, indem das eine oder die mehreren Messer in einer Richtung quer zu der Förderrichtung bewegt werden, um das eine oder die mehreren Messer mit dem einen oder den mehreren Gelenken (24-26) auszurichten, um so
den Flügel oder Flügelteil von einem Rest des Schlachtkörpers zu trennen, indem der Flügel mit dem einen oder den mehreren Messern durch das eine oder die mehreren Gelenke an den bestimmten Gelenkpositionen geschnitten wird, indem das eine oder die mehreren Gelenke mit dem einen oder den mehreren Messern kollidieren, während der Geflügelschlachtkörper gefördert wird.

6. System nach Anspruch 5, wobei der Sensor einen Bildsensor, insbesondere einen Röntgenbildsensor, umfasst, der zum Erfassen eines Bildes des Schlachtkörpers konfiguriert ist, und wobei das System eine Verarbeitungseinheit umfasst, die zum Bestimmen der einen oder mehreren Gelenkpositionen auf der Grundlage des erfassten Bildes konfiguriert ist.

7. System nach Anspruch 5 oder 6, wobei der Förderer zum Fördern des Schlachtkörpers in einer Ausrichtung konfiguriert ist, in der eine kraniokaudale Achse des Schlachtkörpers im Wesentlichen parallel zu der Förderrichtung des Förderers gerichtet ist.

8. System nach einem der Ansprüche 5 bis 7, umfassend eine seitliche Führungsschiene, die sich seitlich von dem Förderer im Allgemeinen parallel zu der Förderrichtung des Förderers erstreckt, wobei die seitliche Führungsschiene dazu konfiguriert ist, während des Förderns des Schlachtkörpers mit dem Förderer den Flügel in Eingriff zu nehmen und den Flügel in eine ausgestreckte Position zu führen, in der sich mindestens ein oberer Flügelabschnitt des Flügels nach außen von dem Schlachtkörper erstreckt.

9. System nach einem der Ansprüche 5 bis 8, umfassend ein erstes Messer mit einer einstellbaren ersten Messerposition, das dazu eingerichtet ist, mit besagtem Messer einen vorbereitenden Einschnitt entlang des Schultergelenks in einer ersten Schnittebene vorzunehmen, die parallel zu einer Richtung des Förderns verläuft.

10. System nach Anspruch 9, dazu eingerichtet, die erste Messerposition auf der Grundlage einer bestimmten Schultergelenkposition eines Schultergelenks des Flügels anzupassen.

11. System nach Anspruch 9 oder 10, umfassend ein zweites Messer mit einer einstellbaren zweiten Messerposition, das dazu eingerichtet ist, einen Trennschnitt zumindest teilweise durch das Schultergelenk in einer zweiten Schnittebene vorzunehmen, die parallel zu der Richtung des Förderns verläuft und sich von der ersten Ebene unterscheidet.

12. System nach Anspruch 11, dazu eingerichtet, die zweite Messerposition auf der Grundlage der bestimmten Schultergelenkposition eines Schultergelenks des Flügels anzupassen.

13. System nach Anspruch 11 oder 12, wobei der vorbereitende Einschnitt und der Trennschnitt sich an gegenüberliegenden Seiten des Schultergelenks befinden.

14. System nach einem der Ansprüche 11 bis 13, wobei die erste Schnittebene und die zweite Schnittebene im Wesentlichen senkrecht zueinander stehen.

15. System nach einem der Ansprüche 11 bis 14, dazu eingerichtet, während des Vornehmens des Trennschnitts mit dem zweiten Messer in der zweiten Schnittebene das zweite Messer in einer Richtung quer zu der zweiten Schnittebene von dem Schlachtkörper weg zu bewegen.

## Revendications

1. Procédé pour retirer une aile ou une partie d'aile d'une carcasse de volaille, l'aile ou la partie d'aile comprenant plusieurs sections d'aile articulées par une ou plusieurs articulations, par un système de traitement automatique (1) qui transporte la carcasse de volaille (2) sur un mandrin ;
le procédé étant **caractérisé par** les faits de :
déterminer, sans contact, une position d'articulation des une ou plusieurs articulations (24-26) de l'aile (20) ;
régler une position de couteau des un ou plusieurs couteaux (11, 12, 33, 34) par rapport à la carcasse de volaille (2) sur la base de la position déterminée en déplaçant les un ou plusieurs couteaux, en fonction de la position d'articulation déterminée, dans une direction transversale à une direction de transport afin d'aligner les un ou plusieurs couteaux avec les une ou plusieurs articulations ; et
séparer l'aile ou la partie d'aile du reste de la carcasse en coupant l'aile avec les un ou plusieurs couteaux au niveau des une ou plusieurs articulations dans la position déterminée, dans lequel l'aile est coupée avec les un ou plusieurs couteaux dans les une ou plusieurs articulations en ayant les une ou plusieurs articulations qui entrent en collision avec les un ou plusieurs couteaux tout en transportant la carcasse de volaille.

2. Procédé selon la revendication 1, dans lequel le fait de déterminer la position d'articulation comprend le fait d'obtenir une image d'un capteur d'image, en particulier un capteur d'image à rayons X, et analyser l'image obtenue afin de déterminer la position de l'articulation.

3. Procédé selon la revendication 1 ou la revendication 2, dans lequel pendant le transport, la détermination et/ou la coupe, le mandrin est orienté pour diriger un axe craniocaudal de la carcasse sensiblement parallèlement à une direction du transport.

4. Procédé selon l'une quelconque des revendications précédentes, comprenant le fait de mettre en prise l'aile avec un rail de guidage latéral afin d'étendre l'aile vers l'extérieur depuis la carcasse de volaille.

5. Système de traitement automatique (1) configuré pour retirer une aile ou une partie d'aile d'une carcasse de volaille, l'aile ou la partie d'aile comprenant plusieurs sections d'aile articulées par une ou plusieurs articulations, le système comprenant :
un transporteur (3) ayant un mandrin (4) pour transporter la carcasse (2) sur le mandrin dans une direction de transport ;
un ou plusieurs couteaux (11, 12, 33, 34) ayant une position réglable par rapport au transporteur ;
le système étant **caractérisé en ce qu'**il comprend en outre :
un capteur (29) configuré pour déterminer, sans contact, une ou plusieurs positions d'articulation dans l'aile (20) ;
dans lequel le système est agencé pour régler, en fonction de la position de l'articulation déterminée, une position de couteau des un ou plusieurs couteaux par rapport au transporteur en déplaçant les un ou plusieurs couteaux dans une direction transversale à la direction de transport afin d'aligner les un ou plusieurs couteaux avec les une ou plusieurs articulations (24-26) afin de séparer l'aile ou la partie d'aile du reste de la carcasse en coupant l'aile avec les un ou plusieurs couteaux dans les une ou plusieurs articulations dans les positions d'articulation déterminées en ayant les une ou plusieurs articulations qui viennent en collision avec les un ou plusieurs couteaux tout en transportant la carcasse de volaille.

6. Système selon la revendication 5, dans lequel le capteur comprend un capteur d'image, en particulier un capteur d'image à rayons X, configuré pour capturer une image de la carcasse, et dans lequel le système comprend une unité de traitement configurée pour déterminer les une ou plusieurs positions d'articulation sur la base de l'image capturée.

7. Système selon la revendication 5 ou 6, dans lequel le transporteur est configuré pour transporter la carcasse dans une orientation dans laquelle un axe craniocaudal de la carcasse est dirigé sensiblement parallèlement à la direction de transport du transporteur.

8. Système selon l'une quelconque des revendications 5 à 7, comprenant un rail de guidage latéral s'étendant latéralement du transporteur généralement parallèle à la direction de transport du transporteur, le rail de guidage latéral étant configuré pour, tout en transportant la carcasse avec le transporteur, mettre en prise l'aile et guider l'aile jusqu'à une position étendue dans laquelle au moins une section d'aile supérieure de l'aile s'étend vers l'extérieur depuis la carcasse.

9. Système selon l'une quelconque des revendications 5 à 8, comprenant un premier couteau ayant une première position de couteau réglable agencée pour réaliser une incision préparatoire avec ledit couteau le long de l'articulation d'épaule dans un premier plan de coupe qui s'étend parallèlement à une direction de transport.

10. Système selon la revendication 9, agencé pour régler la première position de couteau sur la base d'une position d'articulation d'épaule déterminée d'une articulation d'épaule de l'aile.

11. Système selon la revendication 9 ou 10, comprenant un deuxième couteau ayant une deuxième position de couteau réglable agencée pour réaliser une coupe de séparation au moins partiellement à travers l'articulation d'épaule dans un deuxième plan de coupe qui s'étend parallèlement à la direction de transport, différent du premier plan.

12. Système selon la revendication 11, agencé pour régler la deuxième position de couteau sur la base de la position d'articulation d'épaule déterminée d'une articulation d'épaule de l'aile.

13. Système selon la revendication 11 ou 12, dans lequel l'incision préparatoire et la coupe de séparation sont sur les côtés opposés de l'articulation d'épaule.

14. Système selon l'une quelconque des revendications 11 à 13, dans lequel le premier plan de coupe et le deuxième plan de coupe sont sensiblement perpendiculaires entre eux.

15. Système selon l'une quelconque des revendications 11 à 14, agencé pour, tout en réalisant la coupe de séparation avec le deuxième couteau dans le deuxième plan de coupe, déplacer le deuxième couteau à l'opposé de la carcasse dans une direction transversale au deuxième plan de coupe.
